# EUROPÄISCHE PATENTSCHRIFT

(11) **EP 1 228 683 B1**
(45) Veröffentlichungstag und Bekanntmachung des Hinweises auf die Patenterteilung: **18.08.2004**
(21) Anmeldenummer: 02100451.0
(22) Anmeldetag: 16.01.1999
(51) Int. Cl.: A01F 12/30

(54) **Mähdrescher mit einem Rotationsförderer**
Combine with a rotational conveyor
Moissoneuse batteuse avec un transporteur rotatif

(30) Priorität: 29.01.1998 DE 19803336
(43) Veröffentlichungstag der Anmeldung: 07.08.2002
(62) Teilanmeldung aus: 99100745.1
(73) Patentinhaber: DEERE & COMPANY, Moline, Illinois 61265-8098 (US)
(72) Erfinder: Bischoff, Lutz, 66503, Dellfeld (DE); Lauer, Fritz, 66894, Krähenberg (DE)
(74) Vertreter: Holst, Sönke, Dr.

(56) Entgegenhaltungen:
- FR-A- 2 342 022
- GB-A- 612 962
- GB-A- 797 686
- US-A- 2 803 505
- US-A- 2 849 103

## Beschreibung

Die Erfindung betrifft einen Mähdrescher mit Schüttlern und einem darüber angeordneten Rotationsförderer, der mit einem Rotationskörper und wenigstens einem Mitnehmer versehen ist, wobei der Rotationskörper eine im wesentlichen geschlossene Mantelfläche aufweist und der Mitnehmer im Inneren des Rotationskörpers gegenüber dessen Rotationsachse exzentrisch und drehbar gelagert ist und sich radial beweglich durch eine Mitnehmerführung erstreckt, die am Rotationskörper angebracht ist.

Es sind mehrere Möglichkeiten bekannt, um Erntegut aufzulockern und zu verteilen. Eine Möglichkeit besteht z. B. darin, mit einem Rotationsförderer, der mit starren Fingern versehen ist, das Fördergut zu erfassen und zu verteilen, beispielsweise oberhalb der Schüttler eines Mähdreschers. Bekannte Mähdrescher verfügen über unterschlächtig fördernde Zinkenförderer oder oberschlächtig fördernde Zahnleistenförderer. In der DE 41 27 118 A wird eine schnell umlaufende Gutbearbeitungsvorrichtung in der Form eines mit Zinken versehenen Förderbandes vorgeschlagen, die zusätzlich zu einem nachgeschalteten Querschüttler den Erntegutteppich aufreißen soll.

Der Querschüttler läßt sich auch durch einen Rotationsförderer mit beweglichen und exzentrisch gelagerten Mitnehmern ersetzen, wie aus der DE 1 904 406 C und der FR 2 342 022 A bekannt ist. In allen Fällen wird das Stroh für eine gründliche Abscheidung der restlichen Körner länger und intensiver aufgelockert. Durch das Aufreißen des Erntegutteppichs können schwerere Erntegutteile durch die geschaffenen Lücken entweichen. Als nachteilig ist hier anzusehen, dass bei der FR 2 342 022 A die Führungen der Finger über den Körper hinausragen, so dass sich Stroh an ihnen verfangen kann. Es kann um die Trommel herumgeführt werden, so dass sich Gutstaus ergeben. Die DE 1 904 406 C schlägt in einer Ausführungsform vor, um den Umfang der Trommel zwischen den Mitnehmern Federzinken zu verteilen. Da diese nachgiebig gestaltet sind, kann sich auch hier bei größeren Gutdurchsätzen, die dazu führen, dass sich die Federzinken an die Trommel anlegen, Stroh an den über die Trommel hinausragenden Enden der Finger verfangen. Da sich die Finger nicht ganz in die Trommel zurückziehen, wird es mitgeführt und verursacht unerwünschte Gutstaus.

In der GB 612 962 A ist ein in einem Schrägförderer eines Mähdreschers angeordneter Rotationsförderer beschrieben, der aus einem drehbaren, kreiszylindrischen Rotationskörper mit darin exzentrisch angeordneten Mitnehmern aufgebaut ist. Die Finger erstrecken sich durch Mitnehmerführungen, die an der Innenseite des Rotationskörpers angeordnet sind und durchdringen Schlitze im Rotationskörper. Zwischen den Schlitzen im Rotationskörper und den Mitnehmerführungen sind Hohlräume gebildet, in denen sich Erntegut ansammeln kann. Außerdem ist der zylindrische Rotationskörper mechanisch nicht sehr stabil.

Das der Erfindung zugrunde liegende Problem wird darin gesehen, daß die bekannten Rotationsförderer zahlreiche Vorsprünge aufweisen, beispielsweise starre, eventuell gekrümmte Mitnehmer oder vorstehende Schrauben und Mitnehmerführungen, die das Erntegut, beispielsweise Getreidehalme in einem Mähdrescher, sehr weit mitnehmen und sich dieses im ungünstigsten Fall um den Rotationsförderer wickelt. Dadurch wird die Förderkapazität eingeschränkt und das Material sehr grob behandelt.

Dieses Problem wird erfindungsgemäß gelöst durch die Lehre des Anspruchs 1, wobei in den weiteren Patentansprüchen Merkmale genannt sind, die die Lösung in vorteilhafter Weise weiterentwickeln.

Der Rotationsförderer enthält einen Rotationskörper mit wenigstens einem exzentrisch gelagerten und zu diesem radial beweglichen Mitnehmer. Die weitere Beschreibung geht jedoch von mehreren Mitnehmern aus, weil dies der normale Fall ist. In der radial innenliegenden Stellung der Mitnehmer kommt das freie Ende der Mitnehmer unter der äußeren Oberfläche des ihm in Drehrichtung vorlaufenden Bereichs des Rotationskörpers zu liegen. D. h. die Mitnehmer werden hinter die Mantelfläche des Rotationskörpers eingezogen, so daß an der Seite des Rotationsförderers, an der das Fördergut abgegeben wird, dieses nicht so weit mitgenommen wird. Dadurch wird das Material sehr schonend behandelt. Besonders vorteilhaft läßt sich ein solcher Rotationsförderer in einem Mähdrescher mit Schüttlern verwenden. Der Mantel des Rotationskörpers ist aus mindestens einer Metallabdeckung geformt, die so gebogen ist, daß sich die radial nach innen versetzten Bereiche ergeben. Die parallel zur Längsmittenachse verlaufenden Kanten der Metallabdeckung sind auf der in Drehrichtung des Trommelförderers gelegenen Schattenseite der nach innen versetzten Bereiche untergebracht. Dadurch reduziert sich für das Fördergut die Gefahr, sich zu verfangen.

Der Rotationskörper weist vorzugsweise in seiner Umwandung radial nach innen versetzte und parallel zur Längsmittenachse verlaufende Bereiche auf, in denen die Mitnehmerführungen angeordnet sind. Dadurch wird die Gefahr des Wickelns von Fördergut reduziert, da die Oberfläche des Rotationsförderers weniger Vorsprünge aufweist. Zwischen den radial nach innen versetzten Bereichen ist die Mantelfläche des Rotationskörpers in geeigneter Weise, z. B. kreisförmig, gekrümmt und glatt.

Durch die Schaffung radial nach innen versetzter Bereiche, hinter die sich die Mitnehmer in ihrer radial innenliegenden Stellung zurückziehen, erübrigt sich eine radial einwärts gerichtete Verlängerung der Mitnehmerführungen, was zu einer deutlichen Materialersparnis führt, wenn beispielsweise nach starkem Abrieb oder Beschädigung durch das Fördergut, die Mitnehmerführungen erneuert werden müssen.

Ist die Oberfläche des Rotationskörpers mit mehreren Metallabdeckungen versehen, ist es im Falle von Wartungen oder Reparaturen ausreichend, nur die Metallabdeckungen zu lösen, die dem Wartungsvorgang im Wege stehen, so daß sich der Arbeitsaufwand beträchtlich verringert.

Die Mitnehmer sind auf Stummelwellen drehbar gelagert. Eine der Stummelwellen ist im Antriebsflansch des Rotationskörpers gelagert. Durch die Verschraubung des Antriebsflanschs mit einer der Stirnwände des Rotationskörpers ist die Stummelwelle damit automatisch zentriert.

Die Mitnehmer sind in Abständen in der Richtung der Rotationsachse des Rotationsförderers angeordnet, insbesondere derart, daß, beginnend mit dem ersten Mitnehmer jeweils drei Mitnehmer eine Gruppe bilden und aufeinanderfolgende Mitnehmer um je 120° zueinander versetzt sind. Der Abstand aufeinanderfolgender Mitnehmer kann entsprechend der Art des Einsatzes variieren und sich beispielsweise beim Einsatz oberhalb der Schüttler eines Mähdreschers nach der Schüttlerbreite richten.

Der Rotationsförderer wird so über den Schüttlern installiert, daß sich über jedem Strohschüttler eine Gruppe von beispielsweise drei Mitnehmern befindet.

Die Mitnehmer sind auf einer Achse exzentrisch und drehbar gelagert, die selber auf Stummelwellen des Rotationskörpers gelagert ist. Dadurch werden die Mitnehmer bei einer Drehung des Rotationskörpers um dessen Längsmittenachse abwechselnd eingefahren und ausgefahren und können so das Fördergut aufnehmen und abgeben, beispielsweise unterschlächtig fördernd oberhalb der Schüttler eines Mähdreschers.

Um die Gefahr, daß sich Fördergut um den Rotationsförderer legt, weiter zu verringern, kann ein Abweiserblech an den Rotationskörper gestellt werden. Durch die Versenkung der Mitnehmer wird es möglich, einen sehr kleinen Abstand zwischen Abweiserblech und der Oberfläche des Rotationskörpers einzustellen, so daß Fördergut effizient abgewiesen wird. Das Abweiserblech kann sich über die ganze Längsseite des Rotationskörpers erstrecken oder aus Streifen bestehen, die nur zwischen den Mitnehmern das Fördergut von der Oberfläche des Rotationskörpers fernhalten. Wenn das Abweiserblech sehr eng an die Trommel gestellt wird, kann es auch Halme abreißen, die an der Trommel hängenbleiben. Dieser Vorteil kommt um so stärker zur Geltung, je kleiner der Spalt zwischen Abweiserblech und Rotationskörper ist.

Wird das Abweiserblech schwenkbar gelagert, z. B. im Rahmen eines Erntefahrzeugs, kann es durch eventuell doch wickelndes Material nach hinten weggeklappt werden und einen Schalter betätigen, der ein Warnsignal auslöst.

Der Rotationsförderer läßt sich derart anordnen, daß er sowohl zum oberschlächtigen als auch zum unterschlächtigen Transport von Erntematerial geeignet ist. Bei oberschlächtigem Transport kommen die Vorzüge, die sich aus der Versenkung von Vorsprüngen, wie z. B. der Mitnehmerführungen, ergeben, gleichermaßen zur Geltung wie beim unterschlächtigen Transport.

In der Zeichnung ist ein nachfolgend näher beschriebenes Ausführungsbeispiel der Erfindung dargestellt. Es zeigt:
- Fig. 1: eine Erntemaschine mit einem erfindungsgemäßen Rotationsförderer zum Verteilen von Erntegut,
- Fig. 2: einen Längsschnitt durch die Mitte des Rotationsförderers mit darin exzentrisch gelagerten Mitnehmern und
- Fig. 3: einen Querschnitt durch den Rotationsförderer entlang einer Linie 3-3 und in Blickrichtung der dazugehörigen Pfeile in Figur 2.

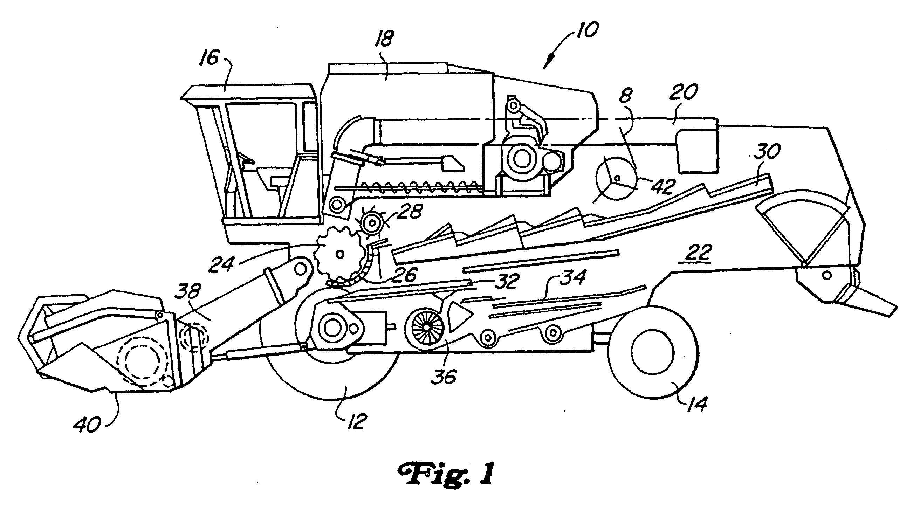

Figur 1 zeigt eine Erntemaschine 10 in der Form eines Mähdreschers mit vorderen angetriebenen und rückwärtigen lenkbaren Rädern 12 bzw. 14 und einer Fahrerkabine 16, von der aus sie von einem Fahrer bedient werden kann. Anstatt eines Mähdreschers könnte ebenso eine stationäre Dreschmaschine, eine Versuchs-Dreschanlage oder dergleichen in Frage kommen. An die Fahrerkabine 16 schließt sich rückwärtig ein Korntank 18 an, der in ihn abgegebenes Gut über ein Entleerrohr 20 nach außen abgeben kann. Der Korntank 18 lagert auf einem Rahmen 22, in dem zugeführtes Gut auf dem Weg über eine Dreschtrommel 24, einen Dreschkorb 26 und eine Wendetrommel 28 in seine großen und kleinen Bestandteile zerlegt wird. Auf daran anschließenden Schüttlern 30, sowie auf einem Vorbereitungsboden 32 und Sieben 34, wird eine weitere Trennung des geernteten Guts durchgeführt, wobei schließlich der ausgedroschene Gutanteil in den Korntank 18 gefördert wird, die großen Erntegutteile über die Schüttler 30 auf den Boden abgelegt werden und leichte Bestandteile mittels eines Gebläses 36 von den Sieben 34 ebenfalls auf den Boden geblasen werden. Auf dem Boden liegendes oder stehendes Gut wird über einen Schrägförderer 38 der Dreschtrommel 24 zugeführt, nachdem es von einer Erntegutbergungsvorrichtung 40 vom Boden aufgenommen worden ist.

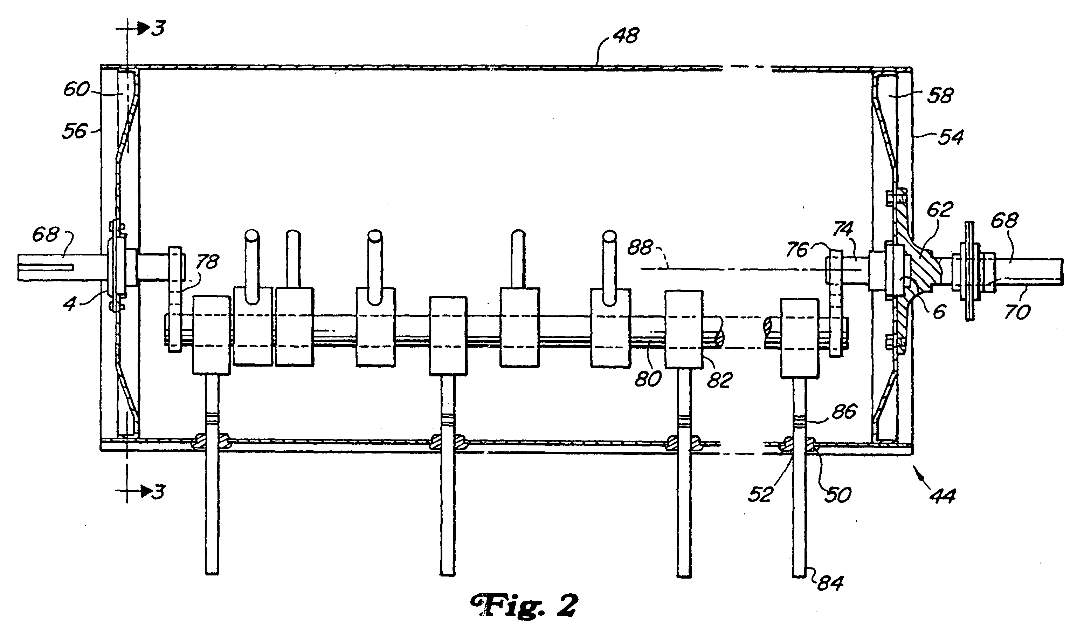

Oberhalb der Schüttler 30 ist um eine quer zur Fahrtrichtung angeordnete Drehachse ein als Zusatzabscheider dienender Rotationsförderer 42 mit einem Rotationskörper 44 und Mitnehmern 84, wie in Figur 2 gezeigt, vorgesehen, der aus Metall oder Kunststoff besteht. An den Rotationskörper 44 ist ein Abweiserblech 8 gestellt, das schwenkbar gelagert sein kann.

Die Drehung des Rotationsförderers 42 erfolgt mit Blick auf Figur 1 entgegen dem Uhrzeigerdrehsinn, d. h. unterschlächtig fördernd. Hierzu sind ebenfalls nicht gezeigte Antriebsmittel z. B. eine mit einer Stirnwand des Rotationskörpers 44 drehfest verbundene Riemenscheibe vorgesehen, die einen von einem Motor kommenden Antrieb einleitet.

Die Stellung des Rotationsförderers 42 befindet sich vorzugsweise - aber nicht ausschließlich - oberhalb der Schüttler 30 im Bereich deren halber Länge. Diese Stellung kann mittels einer entsprechenden Führung vertikal wie auch horizontal geändert werden.

Alternativ könnte der Rotationsförderer 42 auch unmittelbar stromabwärts der Wendetrommel 28 vorgesehen werden.

Die Antriebsmittel können auf vielfältige Weise ausgestaltet sein und z. B. ein geschwindigkeitsvariables und/oder drehrichtungsumkehrbares Getriebe enthalten, mit dem die Drehzahl des Rotationsförderers 42 geändert und dessen Drehrichtung umgekehrt werden kann.

Auf diese Weise kann der Rotationsförderer 42 sowohl ober- als auch unterschlächtig fördernd angetrieben werden, wobei gegebenenfalls die Stellung der Mitnehmer 84 entsprechend angepaßt werden muß.

Die bisherige Beschreibung zeigt, daß der Aufbau des Rotationsförderers 42 im wesentlichen dem Aufbau des Mittenbereichs einer Förderschnecke eines Schneidwerks oder einer Pick-Up entspricht, die hinlänglich bekannt sind.

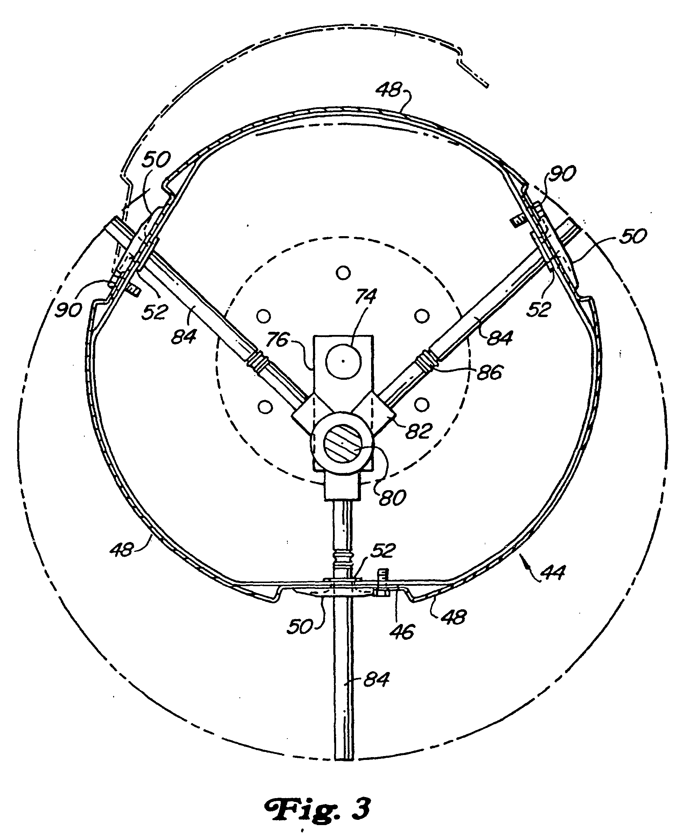

Gemäß Figur 3 enthält der Rotationsförderer 42 einen Rotationskörper 44, dessen Mantelfläche sich im vorliegenden Fall aus drei Metallabdeckungen 48 zusammensetzt. Die Metallabdeckungen 48 sind derart gebogen, daß sich radial nach innen versetzte, parallel zur Rotationsachse des trommelförmigen Rotationsförderers 42 verlaufende Bereiche 46 ergeben, in denen sich in dem gezeigten Ausführungsbeispiel achtzehn radial nach innen erstreckende aus Kunststoff oder Metall bestehende Mitnehmerführungen 50 und Öffnungen 52 befinden. Die parallel zur Rotationsachse verlaufenden Endkanten der Metallabdeckungen 48 verschwinden in den radial nach innen versetzten Bereichen 46.

Stirnwände 54 und 56 des Rotationskörpers 44 werden von Scheiben 58 und 60 gebildet, von denen eine mit einem Lagerflansch 62 versehen ist, der an sechs hexagonal angeordneten Stellen mittels Schrauben 64 an der Scheibe 58 befestigt ist. Die Scheiben 58 und 60 sind mit der Innenseite von zwei Metallabdeckungen 48 des Rotationskörpers 44 punktförmig verschweißt und besitzen auf der in das Innere des Rotationskörpers 44 weisenden Seite topfförmige Einbuchtungen. Getragen wird der Rotationskörper 44 von Stummelwellen 66 und 68. Die mit dem Lagerflansch 62 verbundene Stummelwelle 66 ist mit einer Keilnut 70 für ein Zahnrad versehen.

Im Rotationskörper 44 befindet sich eine exzentrisch und parallel zur Rotationsachse des Rotationskörpers 44 angeordnete Lagervorrichtung, die zwei ortsfeste Stummelwellen 68 und 74, zwei Tragarme 76 und 78 und eine Achse 80 enthält. Auf der Achse 80 sind um diese schwenkbare zweiteilig ausgebildete Klammern 82 in Abständen befestigt.

Die Mitnehmer 84 sind als geradförmige massive und gleich lange Stäbe mit im gezeigten Beispiel kreisrundem Querschnitt und Sollbruchstellen 86 ausgebildet, können aber z. B. auch der Drehrichtung nachlaufend geformt sein und müssen prinzipiell nicht massiv sein. Die Füße der Mitnehmer 84 sind so ausgebildet, daß sie in entsprechende Aussparungen der Klammern 82 passen und dort gehalten werden.

Die Mitnehmer 84 sind entlang der Achse 80 so angeordnet, daß sie um einen festen Winkel, z. B. 120°, zueinander versetzt sind und sich durch die Mitnehmerführungen 50 erstrecken. Die Mitnehmer 84 stehen über die Öffnungen 52 und Mitnehmerführungen 50 im Rotationskörper 44 unterschiedlich weit über diesen nach außen über.

Die Achse 80 ist vermittels der Tragarme 76 und 78 mit den Stummelwellen 74 und 68 starr verbunden. Die Stummelwelle 74 ist drehbeweglich im Lagerflansch 62 gelagert und die Stummelwelle 68 wird außerhalb des Rotationskörpers 44 festgesetzt. Vermöge zweier Rollenlager 4 und 6 wird erreicht, daß bei einer Drehung des Rotationskörpers 44 in einer Ebene senkrecht zur Längsmittenachse 88 die Scheiben 58 und 60 um die ortsfesten Stummelwellen 68 und 74 rotieren. Die Achse 80 behält ihre Position bei und die Mitnehmer 84 werden während eines Umlaufs des Rotationskörpers 44 über die Mitnehmerführungen 50, die sich lateral mittig in den radial nach innen versetzten Bereichen 46 befinden, ein- und ausgefahren. Befindet sich ein Mitnehmer 84 in der radial nach innen versetzten Position, dann befindet sich sein freies Ende unter der äußeren Manteloberfläche des radial nicht versetzten Bereichs des Rotationskörpers 44. Die von den freien Enden der Mitnehmer 84 beschriebene Bahn ist in Figur 3 gestrichelt eingezeichnet.

Die Mitnehmerführungen 50 sind in den nach innen versetzten Bereichen 46 des Rotationskörpers 44 angeordnet und an zwei Stellen in Querrichtung zur Längsmittenachse 88 gesehen beidseitig der Öffnungen 52 mit den Metallabdeckungen 48 verschraubt oder vernietet. Die Metallabdeckungen 48 sind neben jeder Mitnehmerführung 50 über Schrauben 90 miteinander verbunden. Zwei der drei Metallabdeckungen 48 sind mit den Scheiben 58 und 60 fest verschweißt. Die dritte Metallabdeckung 48 kann durch Lösen der Schrauben 90 vollständig abgenommen werden. Die Schrauben 90 sind auf der in Drehrichtung des Rotationskörpers 44 liegenden Schattenseite der radial nach innen versetzten Bereiche 46 untergebracht.

Die Verwendung mehrerer Metallabdeckungen 48 gemäß Figur 2 und 3 hat neben der Schaffung von radial nach innen versetzten Bereichen für die Fingerführungen 50 und Verschraubungen den Vorteil, daß sie die Zugänglichkeit und Montage erheblich vereinfacht. Um beispielsweise den Zugang zu den Klammern 82 zu ermöglichen, genügt es, die Verschraubungen der nicht mit den Scheiben 58 und 60 verschweißten Metallabdeckung 48 in der Versenkung, in der sich die Fingerführung 50 befindet, zu entfernen. Die Metallabdeckung 48 steht dann, wie in der Figur 3 anhand zweier Einstellungen gezeigt, von der Mantelfläche ab.

Entsprechend Figur 1 läßt sich an den Rotationskörper 44 ein Abweiserblech 8 stellen, das so orientiert ist, daß bei einer Drehung des Rotationskörpers 44 Fördergut, das sich um den Rotationskörper 44 gelegt hat, abgestreift wird.

Bei einem Einsatz des Rotationsförderers 42 in einem Mähdrescher können die Mitnehmer 84 so angeordnet werden, daß sie sich in Gruppen von drei Mitnehmern 84 über einem Schüttler 30 befinden, d. h. in einer 5-Schüttler-Maschine kommen fünfzehn und in einer 6-Schüttler-Maschine achtzehn Mitnehmer 84, wie in der Figur 2 gezeigt, zum Einsatz. Die drei sich jeweils vor den Stirnwänden 54 und 56 des Rotationskörpers 44 befindlichen Mitnehmer 84 besitzen in diesem Beispiel einen geringeren Abstand zueinander als die restlichen Mitnehmer 84.

## Patentansprüche

1. Mähdrescher (10) mit Schüttlern (30) und einem darüber angeordneten Rotationsförderer (42), der mit einem Rotationskörper (44) und wenigstens einem Mitnehmer (84), versehen ist, wobei der Rotationskörper (44) eine im wesentlichen geschlossene Mantelfläche aufweist und der Mitnehmer (84) im Inneren des Rotationskörpers (44) gegenüber dessen Rotationsachse exzentrisch und drehbar gelagert ist und sich radial beweglich durch eine Mitnehmerführung (50) erstreckt, die am Rotationskörper (44) angebracht ist, **dadurch gekennzeichnet, daß** in der radial innenliegenden Stellung des Mitnehmers (84) das freie Ende des Mitnehmers (84) weiter innen zu liegen kommt als die äußere Manteloberfläche des der Mitnehmerführung (50) vorlaufenden Bereichs des Rotationskörpers (44), wobei mindestens eine Metallabdeckung (48) den Mantel des Rotationskörpers (44) formt und so gebogen ist, daß sich in der Umwandung radial nach innen versetzte Bereiche (46) ergeben, in denen die Endkanten der Metallabdeckung (48) zu liegen kommen.

2. Mähdrescher (10) nach Anspruch 1, **dadurch gekennzeichnet, daß** die Mantelfläche des Rotationskörpers (44) einen radial nach innen versetzten Bereich (46) aufweist, in dem die Mitnehmerführung (50) angeordnet ist.

3. Mähdrescher (10) nach Anspruch 2, **dadurch gekennzeichnet, dass** in der radial innenliegenden Stellung des Mitnehmers (84) das freie Ende des Mitnehmers (84) unter der äußeren Manteloberfläche des radial nicht versetzten Bereichs des Rotationskörpers (44) zu liegen kommt.

4. Mähdrescher (10) nach einem oder mehreren der vorhergehenden Ansprüche, **dadurch gekennzeichnet, daß** eine die Mitnehmer (84) tragende Achse (80) auf Stummelwellen (68) und (74) gehalten ist und eine Stummelwelle (74) im Antriebsflansch (62) des Rotationskörpers (44) gelagert ist.

5. Mähdrescher (10) nach einem oder mehreren der vorhergehenden Ansprüche, **dadurch gekennzeichnet, daß** die Mitnehmer (84) in Abständen entlang der Längsmittenachse (88) des Rotationsförderers (42) angeordnet sind, insbesondere derart, daß sich Mitnehmergruppen aus jeweils drei Mitnehmern (84) ergeben, in denen aufeinanderfolgende Mitnehmer (84) um je 120° zueinander versetzt sind.

6. Mähdrescher (10) nach einem oder mehreren der vorhergehenden Ansprüche, **dadurch gekennzeichnet, daß** über jedem Schüttler (30) eine Gruppe von Mitnehmern (84) angeordnet ist

7. Mähdrescher (10) nach einem oder mehreren der vorhergehenden Ansprüche, **gekennzeichnet durch** mindestens ein Abweiserblech (8), das in geringem Abstand zu dem Rotationskörper (44) verläuft.

8. Mähdrescher (10) nach Anspruch 7, **dadurch gekennzeichnet, daß** das dem Rotationskörper zugelegte Abweiserblech (8) schwenkbar gelagert ist und bei seinem Abheben vom Rotationskörper (44) ein Alarmsignal ausgelöst wird.

## Claims

1. A combine harvester (10) with shakers (30) and a rotary conveyor (42) arranged above them and provided with a rotary body (44) and at least one entraining element (84), wherein the rotary body (44) has a substantially closed peripheral surface and the entraining element (84) is mounted in the interior of the rotary body (44) eccentrically and rotatably relative to its axis of rotation, and extends radially movably through an entraining element guide (50) which is fitted on the rotary body (44), **characterized in that**, in the radially inner lying position of the entraining element (84), the free end of the entraining element (84) comes to lie further inwards than the outer peripheral surface of the region of the rotary body (44) running ahead of the entraining element guide (50), wherein at least one metal cladding (48) forms the peripheral wall of the rotary body (44) and is so bent that radially inwardly offset regions (46) result in the cover and the end edges of the metal cladding (48) come to lie therein.

2. A combine harvester (10) according to claim 1, **characterized in that** the peripheral surface of the rotary body (44) has a radially inwardly offset region (46) in which the entraining element guide (50) is arranged.

3. A combine harvester (10) according to claim 2, **characterized in that**, in the radially inner lying position of the entraining element (84), the free end of the entraining element (84) lies below the outer peripheral surface of the region of the rotary body (44) which is not radially offset.

4. A combine harvester (10) according to one or more of the preceding claims, **characterized in that** an axle (80) carrying the entraining elements (84) is held on stub shafts (68) and (74) and one stub shaft (74) is mounted in the drive flange (62) of the rotary body (44).

5. A combine harvester (10) according to one or more of the preceding claims, **characterized in that** the entraining elements (84) are arranged at intervals along the longitudinal central axis (88) of the rotary conveyor (42), especially in such a way that entraining element groups of three entraining elements (84) each result, in which successive entraining elements (84) are offset by 120E from each other.

6. A combine harvester (10) according to one or more of the preceding claims, **characterized in that** a group of entraining elements (84) is arranged over each shaker (30).

7. A combine harvester (10) according to one or more of the preceding claims, **characterized by** at least one deflector plate (8) which extends a small distance from the rotary body (44).

8. A combine harvester (10) according to claim 7, **characterized in that** the deflector plate (8) associated with the rotary body is pivotally mounted and an alarm signal is given when it lifts from the rotary body (44).

## Revendications

1. Moissonneuse batteuse (10) avec des secoueurs (30) et un transporteur rotatif (42) disposé au-dessus de ceux-ci, qui est pourvu d'un corps tournant (44) et d'au moins un entraîneur (84), dans lequel le corps tournant (14) présente une surface latérale sensiblement fermée et l'entraîneur (84) est monté à l'inférieur du corps tournant (44) de façon rotative et excentrique par rapport à l'axe de rotation de celui-ci et s'étend d'une façon mobile radialement à travers un guide d'entraîneur (50), qui est installé sur le corps tournant (44), **caractérisée en ce que**, dans la position radialement intérieure de l'entraîneur (84), l'extrémité libre de l'entraîneur (84) vient se placer plus loin vers l'intérieur que la surface latérale extérieure de la région du corps tournant (44) précédant le guide d'entraîneur (50), au moins un recouvrement métallique (48) formant l'enveloppe du corps tournant (44) et étant courbé de telle façon qu'il se forme dans la paroi d'enveloppe des régions déportées vers l'intérieur (46), dans lesquelles les bords d'extrémité du recouvrement métallique (48) viennent se placer.

2. Moissonneuse batteuse (10) selon la revendication 1, **caractérisée en ce que** la surface latérale du corps tournant (44) présente une région déportée radialement vers l'intérieur, dans laquelle le guide d'entraîneur (50) est disposé.

3. Moissonneuse batteuse (10) selon la revendication 2, **caractérisée en ce que**, dans la position radialement intérieure de l'entraîneur (84), l'extrémité libre de l'entraîneur (84) vient se placer sous la surface latérale extérieure de la région non déportée radialement du corps tournant (44).

4. Moissonneuse batteuse (10) selon une ou plusieurs des revendications précédentes, **caractérisée en ce qu'**un axe (80) portant les entraîneurs (84) est soutenu par des bouts d'arbre (68) et (74) et un bout d'arbre (74) est monté dans la bride motrice (62) du corps tournant (44).

5. Moissonneuse batteuse (10) selon une ou plusieurs des revendications précédentes, **caractérisée en ce que** les entraîneurs (84) sont espacés le long de l'axe longitudinal central (88) du transporteur tournant (42), en particulier de telle façon qu'il en résulte des groupes d'entraîneurs comportant chacun trois entraîneurs (84), dans lesquels les entraîneurs (84) successifs sont décalés de 120° l'un par rapport à l'autre.

6. Moissonneuse batteuse (10) selon une ou plusieurs des revendications précédentes, **caractérisée en ce qu'**un groupe d'entraîneurs (84) est disposé au-dessus de chaque secoueur (30).

7. Moissonneuse batteuse (10) selon une ou plusieurs des revendications précédentes, **caractérisée par** au moins une bavette (8), qui se trouve à faible distance du corps tournant (44).

8. Moissonneuse batteuse (10) selon la revendication 7, **caractérisée en ce que** la bavette (8) associée au corps tournant est pivotante et **en ce qu'**un signal d'alarme est déclenché lorsqu'elle se soulève du corps tournant (44).
